# EUROPEAN PATENT SPECIFICATION

(11) **EP 3 254 657 B1**
(45) Date of publication and mention of the grant of the patent: **26.12.2018**
(21) Application number: 15881144.8
(22) Date of filing: 07.08.2015
(51) Int. Cl.: A61G 5/02, B60T 1/06, B60T 7/10, F16D 65/16, F16D 121/14, F16D 125/28, F16D 127/04, F16D 127/06, F16D 129/04, A61G 5/10

(54) **BRAKE DEVICE AND WHEELCHAIR**
BREMSVORRICHTUNG UND ROLLSTUHL
DISPOSITIF DE FREIN ET FAUTEUIL ROULANT

(30) Priority: 06.02.2015 JP 2015022241
(43) Date of publication of application: 13.12.2017
(73) Proprietor: Matsunaga Manufactory Co., Ltd., Gifu 503-1272 (JP)
(72) Inventor: MIYAGAWA, Kengo, Yoro-gun Gifu 503-1272 (JP); MATSUNAGA, Noriyuki, Yoro-gun Gifu 503-1272 (JP)
(74) Representative: Office Freylinger
(86) International application number: PCT/JP2015/072447
(87) International publication number: WO 2016/125327

(56) References cited:
- JP-A- S54 100 041
- JP-A- 2009 219 733
- JP-A- 2013 046 655
- US-A1- 2004 099 487
- US-B1- 6 352 138

## Description

### [TECHNICAL FIELD]

The present invention relates to a brake device and a wheelchair including such a brake device.

### [BACKGROUND ART]

Various brake devices have conventionally been employed in wheelchairs.

For example, Patent Document 1 discloses a wheelchair employing a toggle brake. The brake device (100) of Patent Document 1 includes a brake main part (10), a brake lever (11) rotatably supported by the brake main part (10), and a stopper (12) that shifts responsive to an operation of the brake lever (11). In this kind of common toggle brake, rotation of the wheel (7) is braked by making the sharp edge of the stopper (12) dig into the tire of the wheel (7) of the wheelchair (1).

Patent Document 2 discloses a wheelchair employing a drum brake. The brake mechanism (200) of Patent Document 2 includes a common drum brake main part (201) that is mounted to a hub (or axle (19)) of the wheels (11) via a plurality of fixing holes (204). In the interior of the main part (201) there is arranged a pair of arc-shaped brake shoes. In addition, a brake arm (202) is supported pivotally with the axis (202b) rotatable by the main part (201). Rotation of the wheels (11) is braked by pivoting the brake arm (202) by means of a wire so as to push the brake shoes against a lining on the interior surface of the drum. In general, the brake shoes are made of metal, and the lining is made of a friction material.

### [RELATED ART DOCUMENTS]

### [PATENT DOCUMENTS]

Patent Document 1: Japanese Unexamined Patent Application Publication No. 2003-159284
Patent Document 2: Japanese Unexamined Patent Application Publication No. 2014-176550
Other solutions of brake devices known in the art are disclosed in patent documents US 6 352 138 B1, and US 2004/099487 A1

### [SUMMARY OF THE INVENTION]

### [PROBLEM TO BE SOLVED BY THE INVENTION]

With toggle brakes such as the one disclosed in Patent Document 1, in order to ensure effective braking, the edge of the stopper had to forcefully dig into the tires of the wheels to brake the wheels' rotation. In other words, ensuring a specific brake strength causes stress on the stopper as it is pressed against the tire with great force. The stopper itself therefore needs high hardness and durability. It is therefore not suitable to make a stopper for a toggle brake out of synthetic resin, which is generally less durable than metals such as stainless steel, taking wear on the stopper edge and the need for safe braking performance into consideration.

Meanwhile, with the drum brake disclosed in Patent Document 2, rotation of the wheels is braked by strongly pressing the brake shoes against the lining. The brake shoes are therefore subjected to great force, and the lining wears away easily. As such, as is the case with a toggle brake, it is not suitable to make the drum brake out of synthetic resin, which is generally less durable than metals such as stainless steel, since the brake components are subjected to great stress.

In other words, conventional brakes mainly utilize braking due to pressure contact, which causes great stress during operation. This necessitated the use of highly durable components made of metal such as stainless steel, in order to ensure desired safety standards. This caused a problem in that the options for brake materials were limited, which restricted freedom in designing the wheelchair as a whole. There is thus a need for a brake device that can exhibit the desired braking and durability performance regardless of the choice of material for the components of the brake device.

The present invention was made in order to solve the aforementioned problem, and an object of the invention is to provide a brake device that reduces the stress caused during a braking operation, and a wheelchair equipped with such a brake device.

### [MEANS FOR SOLVING THE PROBLEM]

The present invention provides a brake device according to the appended claims.
A brake device according to an embodiment of the present invention is a brake device for braking a wheel of a wheelchair, the brake device including:
a rotary member including a round external peripheral part arranged concentrically with the wheel and a plurality of engaging teeth that protrude radially from the external peripheral part, the rotary member rotating synchronously with the wheel;
an engaging member retained in movable fashion on a frame part of the wheelchair and including an engaging projection that engages with the engaging teeth, the engaging projection being accommodated in grooves between the plurality of engaging teeth of the rotary member, and the engaging member shifting between a first position whereby the engaging projection is positioned outside the grooves and a second position where at least a portion of the engaging projection is positioned inside the grooves;
an urging member that urges the engaging member to one of the first position and the second position; and
a lock part that maintains the engaging member in the other of the first position and the second position,
wherein the engaging member shifts between the first position and the second position such that the engaging projection moves linearly toward or away from the rotary member along a radial direction of the rotary member, while the engaging projection maintains its orientation toward the center of the rotary member.

According to the aforementioned brake device, the engaging projection of the engaging member supported on the frame part of the wheelchair engages with the engaging teeth formed on the rotary member to enable braking of the rotation of the rotary member and the wheels. In other words, in the present invention the rotation of the engaging teeth is locked by the engaging projection, which enables safe braking of the wheels without subjecting the components to great stress due to friction or the like. Switching between a travelling mode and a braking mode is performed by shifting the engaging member between a first position whereby the engaging projection is positioned outside the grooves and a second position where the engaging projection engages the engaging teeth. Further, it is possible to selectively maintain either the travelling mode or the braking mode of the wheelchair by means of an urging member and a lock part cooperatively acting on the engaging member. Accordingly, the brake device according to the present invention enables easy braking of the rotation of the wheels while suppressing stress during a braking operation.

A brake device according to another embodiment of the present invention is characterized in that the plurality of engaging teeth are arranged along the external peripheral part of the rotary member at equal intervals, and the engaging projection has at its end a U-shape that splits into two protruding pieces, wherein the engaging projection and the engaging teeth engage with each other due to the two protruding pieces fitting into corresponding adjacent grooves of the rotary member, and one of the engaging teeth fitting into a gap between the two protruding pieces. In other words, the present invention allows for the braking state to be maintained in a more stable manner, by virtue of the engagement of the engaging projection with the engaging teeth.

The urging member is an elastic band stretched between a central axis of the wheel and/or the rotary member and the engaging member, wherein the engaging member is urged to the second position by a tensile force of the elastic band. In other words, the present invention allows for the braking state to be maintained by urging the engaging member to the second position using a simple construction.

A brake device according to another embodiment of the present invention is characterized in that the engaging member shifts between the first position and the second position such that the engaging projection moves linearly toward or away from the rotary member along a radial direction of the rotary member. In other words, according to the present invention, the engaging teeth are formed to protrude radially, so that the grooves between the engaging teeth are formed along the radial direction. Meanwhile, the engaging projection moves straight toward the center of the rotary member (along the radial direction). Since the direction in which the grooves between the engaging teeth extend and the direction in which the engaging projection moves are aligned in the radial direction of the rotary member, the engaging projection can smoothly enter and separate from the grooves.

A brake device according to another embodiment of the present invention is characterized in that the engaging member is provided with a guide groove that extends linearly in the radial direction of the rotary member, a guide projection is formed so as to protrude from the frame part of the wheelchair, the guide projection being arranged within the guide groove, and wherein a linear movement of the engaging projection is guided by the guide projection sliding relatively within the guide groove. In other words, in the present invention, the relationship of the guide groove and the guide projection allows for the engaging projection to move more securely along the radial direction of the rotary member. This provides smoother shifting of the engaging member from the first position to the second position.

A brake device according to another embodiment of the present invention is characterized in that the brake device further includes an operating lever pivotally supported on the frame part to operate shifting of the engaging member, the operating lever being pivotally coupled to the engaging member so as to cause the engaging projection to move linearly along the radial direction of the rotary member. In other words, the present invention allows the user to operate the operating lever to switch between a travelling mode (first position) and a braking mode (second position).

A brake device according to another embodiment of the present invention is characterized in that the lock part includes a lock claw attached to the operating lever, wherein the lock claw engages with a projection provided on the frame part of the wheelchair to maintain the operating lever and the engaging member in the first position or the second position. In other words, the present invention allows for the operating lever to be locked with respect to the frame part such that the engaging member is locked in the first position or the second position.

A brake device according to another embodiment of the present invention is characterized in that the rotary member, the engaging member, and the lock part are made of a synthetic resin material, and the urging member is made of a rubber material. In other words, the brake device according to the present invention is made completely of non-metallic materials. By installing this non-metallic brake device on a wheelchair made of a synthetic resin, the wheelchair may be used for a specific purpose. For example, the user can pass through passages equipped with metal detectors in airports or the like without leaving the wheelchair.

A wheelchair according to an embodiment of the present invention is characterized in that it includes the aforementioned brake device.

A wheelchair according to one embodiment of the present invention includes:
a wheelchair main body that has a seat unit, a pair of side frames that support the seat unit and has front casters and rear casters that are respectively attached to the front and rear of the pair of side frames;
a wheel unit that has a pair of frame parts, a pair of wheels supported outside of the pair of frame parts, a connecting shaft that extends between the pair of wheels and that rotatably connects the pair of wheels at both ends of the connecting shaft, and a pair of armrests that are fixed to the connecting shaft and extend above and forward of the wheels; and
a connection mechanism that is provided to the wheelchair main body and that removably connects the connecting shaft of the wheel unit to the wheelchair main body,
wherein the brake device according to an embodiment of the present invention is attached between the wheel and the frame of the wheel unit.

### [BRIEF DESCRIPTION OF THE DRAWINGS]

FIG. 1 shows perspective views of a wheelchair according to an embodiment of the present invention, where (a) is a perspective view seen from the front, and (b) is a perspective view seen from the rear.
FIG. 2 is a side view of the wheelchair as shown in FIG. 1.
FIG. 3 is an exploded perspective view seen from the front of a wheelchair main body and a wheel unit of the wheelchair as shown in FIG. 1.
FIG. 4 is an exploded perspective view seen from the rear of the wheelchair main body and the wheel unit of the wheelchair as shown in FIG. 1.
FIG. 5 shows perspective views of the wheelchair main body of the wheelchair as shown in FIG. 1, where (a) is a perspective view seen from the front, and (b) is a perspective view seen from the rear.
FIG. 6 is a side view of the wheelchair main body as shown in FIG. 5.
FIG. 7 shows perspective views of the wheel unit of the wheelchair as shown in FIG. 1, where (a) is a perspective view seen from the front, and (b) is a perspective view seen from the rear.
FIG. 8 shows the wheel unit as shown in FIG. 7, where (a) is an outer side view, and (b) is a cross-sectional side view seen from the inner side.
FIG. 9 is an outer side view of the frame part of the wheel unit as shown in FIG. 7.
FIG. 10 is a partial exploded perspective view of the wheel unit as shown in FIG. 7.
FIG. 11 is a partial exploded perspective view of the brake device of the wheel unit as shown in FIG. 7.
FIG. 12 shows the rotary member as shown in FIG. 10, where (a) is an inner side view, (b) is an outer side view, and (c) is a cross-sectional view taken along the line A-A.

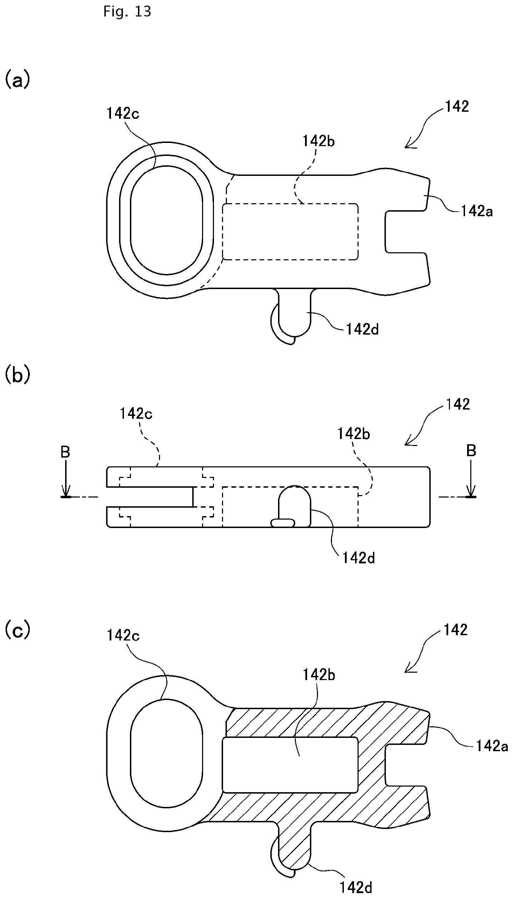

FIG. 13 shows the engaging member as shown in FIG. 10, where (a) is an outer side view, (b) is a plan view, and (c) is a cross-sectional view taken along the line B-B.
FIG. 14 is an outer side view of the lever assembly as shown in FIG. 10.
FIG. 15 is a schematic side view of the brake device of the wheelchair according to the present embodiment in a travelling mode.
FIG. 16 is a schematic side view of the brake device where the lock part is unlocked from the travelling mode as shown in FIG. 15.
FIG. 17 is a schematic side view of the brake device of the wheelchair according to the present embodiment in a braking mode.

### [MODE FOR CARRYING OUT THE INVENTION]

An embodiment of the present invention is described below with reference to the drawings. It should be noted that the configurations shown in the drawings referred to in the following description are general or schematic illustrations for describing preferable configurations and dimensions, and that these dimensions do not necessarily match actual dimensions. In other words, the present invention is not limited to the dimensions shown in the drawings.

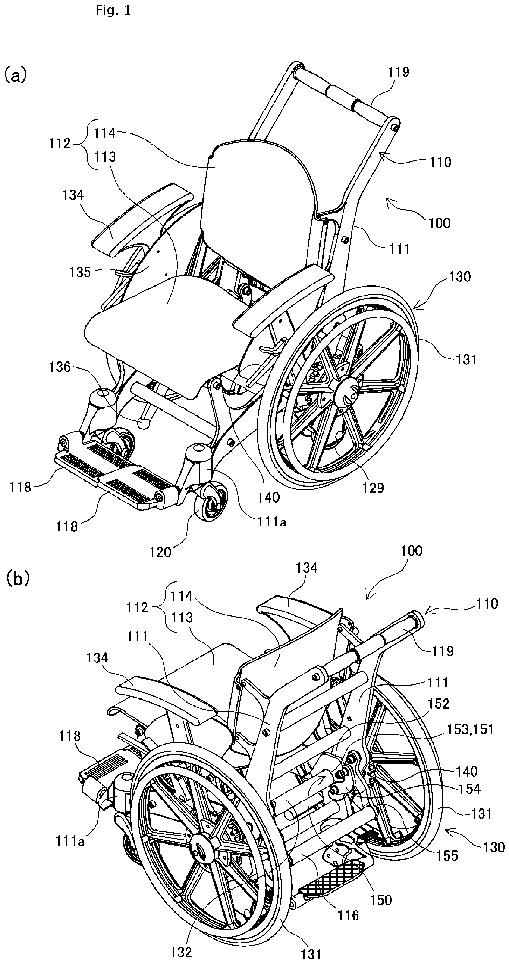

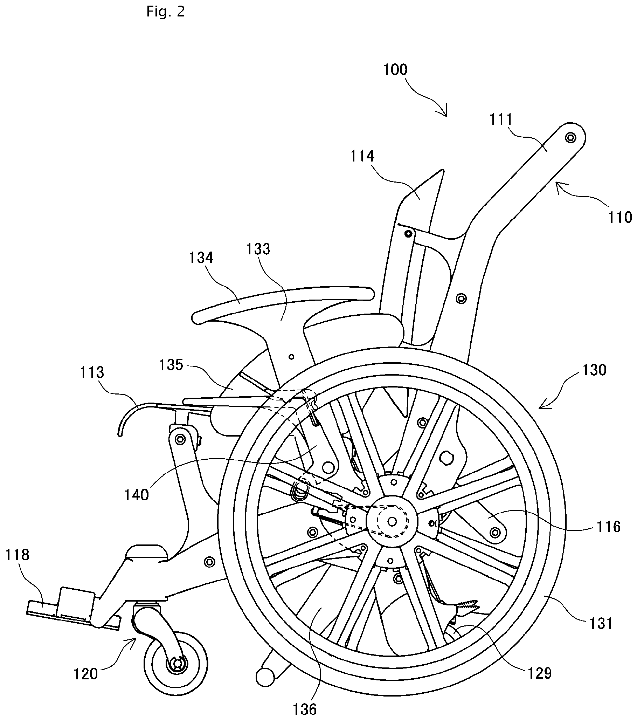

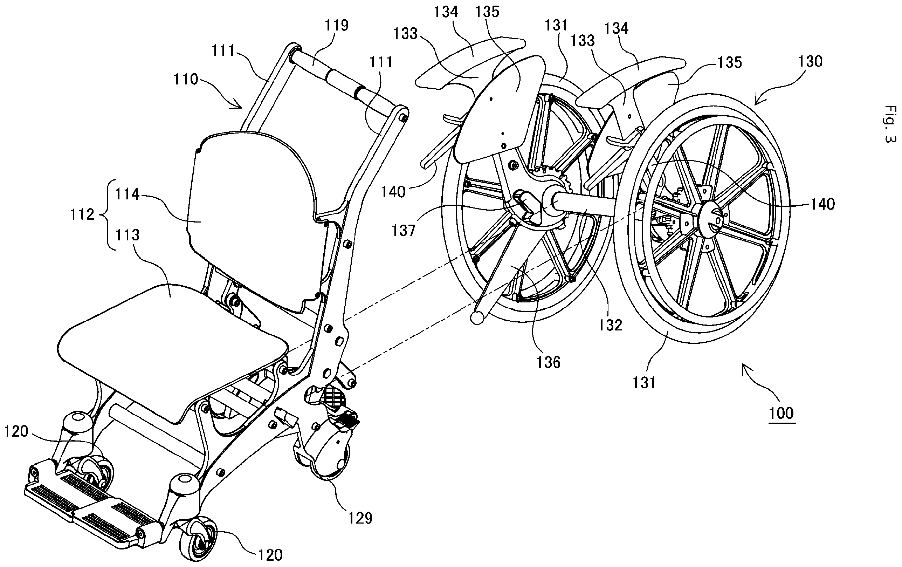

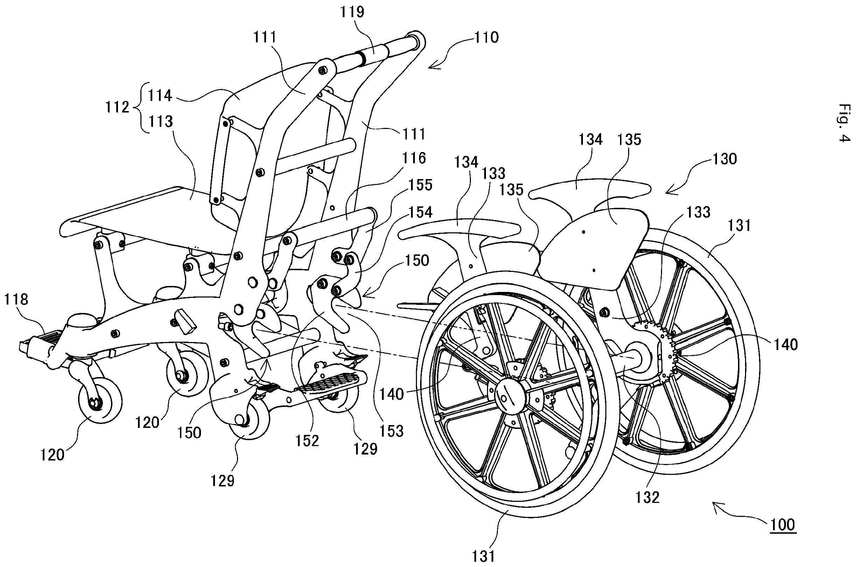

FIGs.1 (a) and (b) are perspective views, seen respectively from the front and from the rear of a wheelchair 100 according to an embodiment of the present invention. FIG. 2 is a side view of the wheelchair 100. FIGs. 3 and 4 are exploded perspective views, seen respectively from the front and from the rear of the wheelchair 100.

As shown in FIGs. 1 and 2, the wheelchair 100 according to an embodiment of the present invention includes a wheelchair main body 110, a wheel unit 130 removably coupled to the wheelchair main body 110, and a brake device 140 that brakes rotation of wheels 131 of the wheel unit 130.

The wheelchair 100 is particularly intended for use in airports and aircraft (or in train stations and trains). For example, when travelling through the wide space of an airport, the wheelchair occupant (or an attendant) can operate the wheelchair 100 in a self-travelling mode with the wheel unit 130 attached to the wheelchair main body 110. On the other hand, when there is a need to travel through the gate in the airport or the narrow aisles on board the aircraft, the wheel unit 130 is separated from the wheelchair main body 110. The attendant can then operate the smaller wheelchair 100 (wheelchair main body 110) from behind to pass through such narrow spaces without difficulty.

Furthermore, the wheelchair 100 according to this embodiment contains no metallic parts whatsoever, allowing it to pass through the metal detecting security gates. More specifically, a hard synthetic resin is employed for the main frame (skeleton) of the wheelchair 100, while ceramic bearings and rubber dampers are used for the casters and driving portions of the wheels. This allows a wheelchair occupant with a disability to pass through airport security, or undergo a search by airport staff using a handheld metal detector, without leaving the wheelchair 100. Accordingly, the wheelchair 100 according to this embodiment is designed with consideration to barrier-free use in airports and aircraft. The wheelchair 100 according to the present invention is not limited to this use, however, and may be adopted for a variety of uses. Depending on the use, the wheelchair may be made of a variety of materials.

As shown in FIGs. 3 and 4, the wheel unit 130 is removably coupled to the wheelchair main body 110 from behind, via a coupling mechanism 150. The coupling mechanism 150 includes a housing groove 151 cut away from the side frame 111, a locking plate 152 that is pivotably supported at the inner surface of the side frame 111, a first linking piece 154 that is pivotally coupled to the locking plate 152, and a second linking piece 155 that is secured to the lever 116 and pivotally coupled to the first linking piece 154. In the locking plate 152 there is formed a clamping part 53 that is open so as to be able to clamp the connecting shaft 132 of the wheel unit 130. In order to couple the wheel unit 130 to the wheelchair main body 110, the connecting shaft 132 of the wheel unit 130 is clamped by the clamping part 153, and the first and second linking pieces 154 and 155 and the locking plate 152 are pivoted. As a result, the connecting shaft 132 clamped by the clamping part 153 is accommodated in the housing groove 151, whereby the wheel unit 130 may be coupled to the wheelchair main body 110, as shown in FIG. 1 (b).

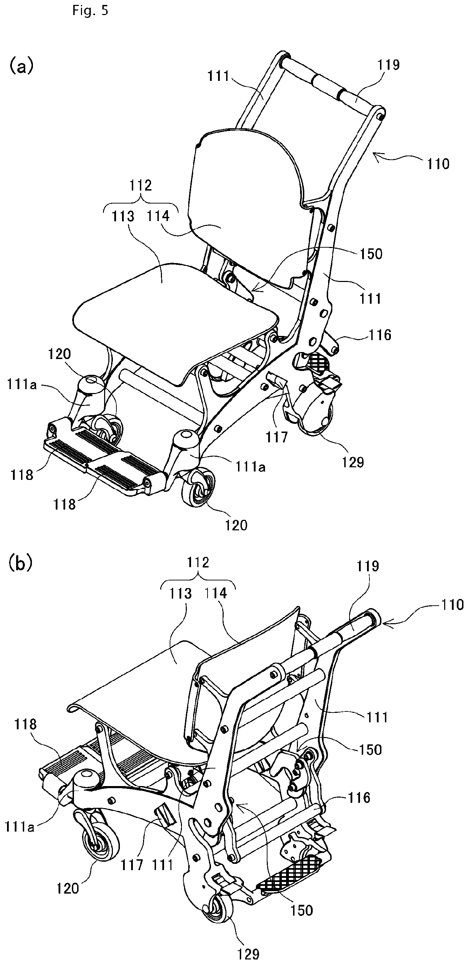

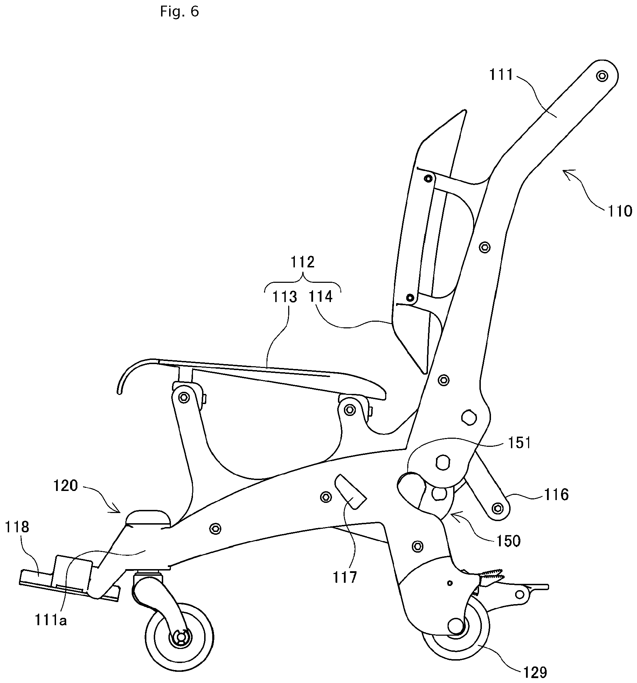

The wheelchair main body 110 constituting the wheelchair 100 according to the present embodiment will be described below, with reference to FIGs. 5 and 6.

FIGs. 5 (a) and (b) are perspective views, seen respectively from the front and from the rear of the wheelchair main body 110 according to an embodiment of the present invention. FIG. 6 is a side view of the wheelchair main body 110. As shown in FIGs. 5 and 6, the wheelchair main body 110 includes a seat unit 112 to seat a wheelchair occupant, a pair of side frames 111 holding the seat unit 112, front casters 120 and rear casters 129 respectively attached to the front and rear of the pair of side frames 111, and footrests 118 provided at lower front ends of the side frames 111. The coupling mechanism 150 for removably coupling the connecting shaft 132 of the wheel unit 130 to the wheelchair main body 110 is provided at the side frames 111 of the wheelchair main body 110. Moreover, the wheelchair main body 110 according to the present embodiment is not provided with armrests. The wheelchair main body 110 when separated from the wheelchair 100 therefore has a sufficiently small width to easily pass through narrow passages.

The pair of side frames 111 consist of a plurality of connected beam members, and define the width of the wheelchair main body 110. The seat unit 112 is supported or secured between the pair of side frames 111, and has a seat 113 and a backrest 114. In the seat unit 112, the seat 113 and the backrest 114 are separate from each other, and are each attached to the pair of side frames 111. In addition, as shown in FIGs. 5 and 6, on the outer side surfaces of the pair of side frames 111, engaged parts 117 are formed so as to protrude from these outer side surfaces. Viewed from the side the engaged parts 117 have an elongate shape, and extend approximately linearly in a forward diagonal upward direction. These engaged parts 117 are formed so as to engage with engaging parts 137 described later, which are in the form of L-shaped projections.

A cylindrical part 111a formed in a cylindrical shape is provided near each of the footrests 118 of the pair of side frames 111. A pair of left and right front casters 120 are pivotably supported by the pair of side frames 111 via through holes 111b formed vertically in the cylindrical parts 111a. Meanwhile, a pair of left and right rear casters 129 are supported non-pivotably (in a fixed manner) at the lower rear ends of the pair of side frames 111. Further, at the upper rear ends of the pair of side frames 111 a push handle 119 is provided between the pair of side frames 111. Operation of the push handle 119 by an attendant enables the wheelchair main body 110 to travel.

Next, the wheel unit 130 constituting the wheelchair 100 and the brake device 140 integrated in the wheel unit 130 will be described in detail. In the present embodiment, the brake device 140 is configured as a handbrake that is operable by the occupant of the wheelchair 100.

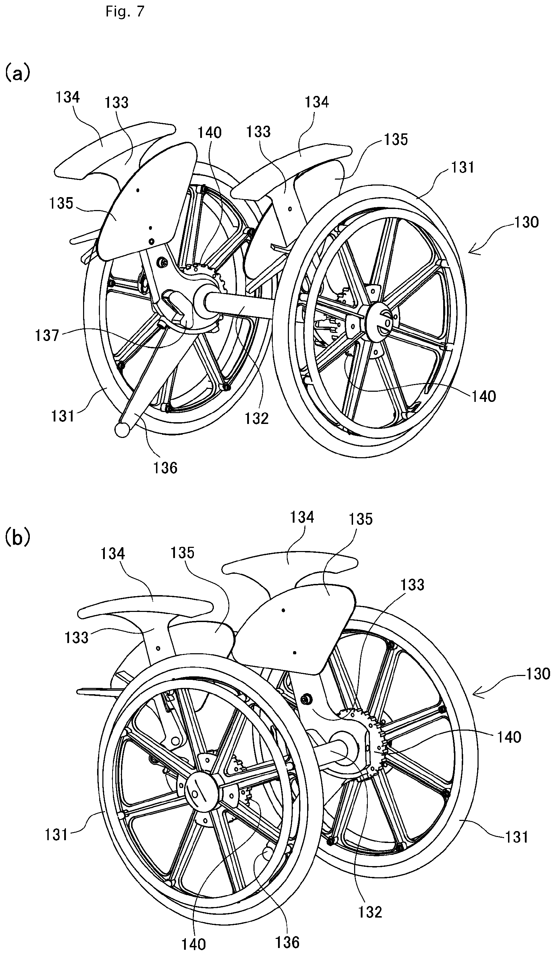

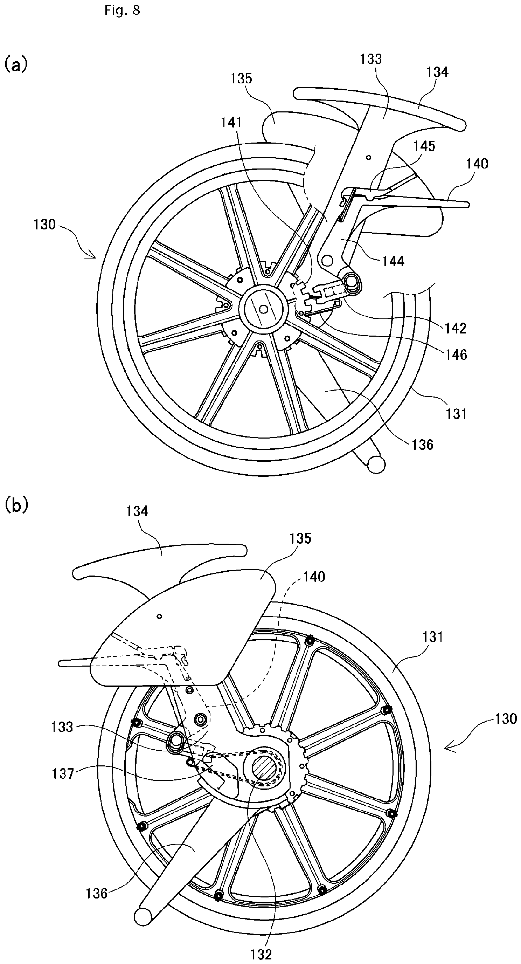

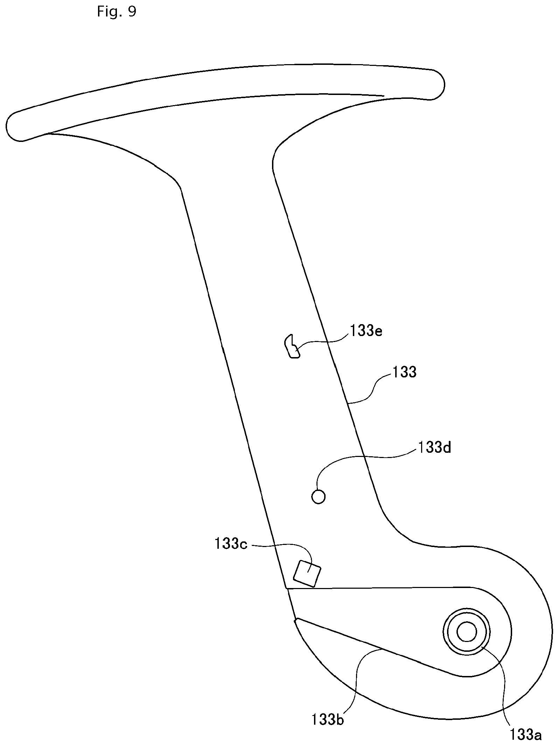

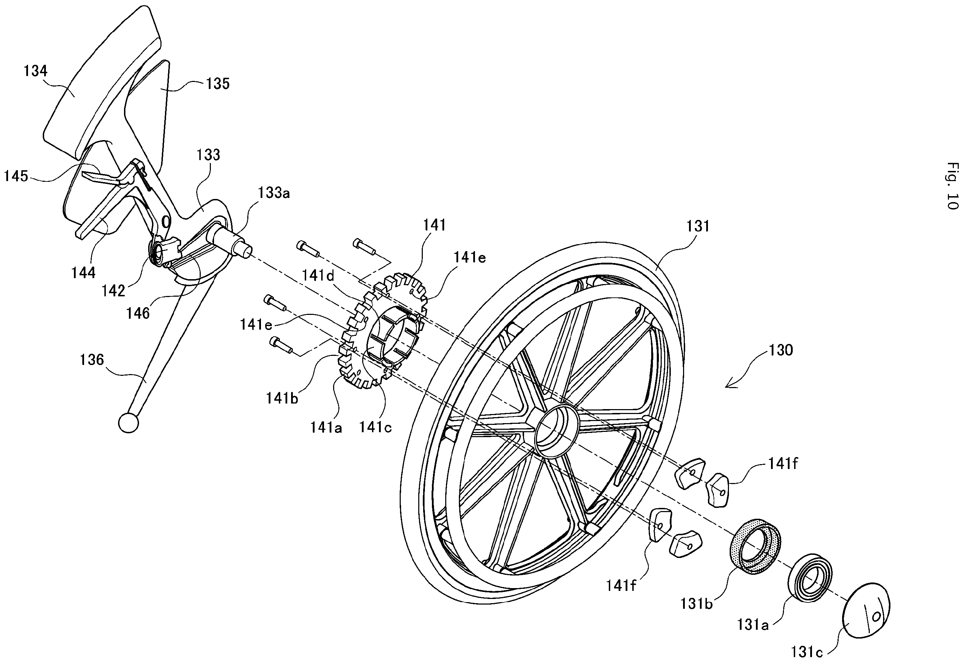

FIGs. 7 (a) and (b) are perspective views, seen respectively from the front and from the rear of the wheel unit 130 according to an embodiment of the present invention. FIGs. 8 (a) and (b) are side views, seen respectively from the outer side and from the inner side of the wheel unit 130. FIG. 9 is a side view seen from the outer side of a frame part 133 of the wheel unit 130. FIG. 10 is an exploded perspective view of the wheel unit 130.

As shown in FIGs. 7 and 8, the wheel unit 130 includes a pair of wheels 131 made of synthetic resin and/or rubber, a connecting shaft 132 made of synthetic resin that rotatably connects the pair of wheels 131, and a pair of frame parts 133 that are fixed to the ends of the connecting shaft 132 and support each of the members at the inner side of the pair of wheels 131. The pair of frame parts 133 extend diagonally forward and upward from the connecting shaft 132, and extend radially outward from the wheels 131 as seen from the side. A pair of armrests 134 are integrally formed at the top ends of the pair of frame parts 133. The pair of armrests 134 are thus fixed to the connecting shaft 132 via the frame parts 133, and extend diagonally forward and upward of the wheels 131. In addition, below the armrests 134, fan-shaped side guards 135 are fixed by synthetic resin screws to the inner surfaces of the frame parts 133. The frame parts 133 and armrests 134 are also made of synthetic resin, and may either be formed integrally with respect to the connecting shaft 132, or as separate parts to be assembled.

In addition, the wheel unit 130 further includes (at least) one leg part 136 that extends downwardly from the connecting shaft 132. The leg part 136 is made of synthetic resin, and may be integrally formed with or assembled with the connecting shaft 132 and/or the frame parts 133. The leg part 136 has a length that is greater than the diameter of the wheels 131, and is configured such that the end of the leg part 136 is separated from the ground in the travelling mode in which the wheel unit 130 is coupled to the wheelchair main body 110. More specifically, the leg part 136 is inclined forward at an angle of about 40 degrees from the six o'clock direction (vertical direction) in the regular mode of the wheel unit 130 (travelling mode of the wheelchair 100). In other words, as the center of gravity of the armrests 134 (frame parts 133) is located forward of the wheel axle (connecting shaft 132), the direction in which the leg part 136 extends is also forward like the center of gravity position of the armrests 134.

When the wheel unit 130 is placed on the ground separately, the connecting shaft 132 along with the frame parts 133 are freely pivotable relative to the wheels 131. In particular, when the frame parts 133 and armrests 134 extending diagonally forward and upward are affected by gravity, the frame parts 133 and armrests 134 tend to rotate in the direction of their center of gravity (forward). Meanwhile, the leg part 136 extends diagonally forward and downward of the wheel unit 130 and outward of the wheels 131. This causes the leg part 136 to contact the ground when the wheel unit 130 is placed on the ground separated from the wheelchair 100, whereby rotation of the armrests 134 and the connecting shaft 132 relative to the wheels 131 can be restricted. In other words, it is possible to prevent the armrests 134 from pivoting and hitting the ground and causing the wheel unit 130 to tip over. In order for the leg part 136 to effectively function as a means for restricting rotation, it is preferable that the leg part 136 extend in a direction at an angle of 30 to 60 degrees (inclination angle from the six o'clock direction of the regular mode of the wheel unit 130) relative to the center of gravity side of the armrests 134. For example, if the inclination angle is smaller than 30 degrees, the support provided by the leg part 136 becomes unstable, and there is a risk of the wheel unit 130 tipping over when a force is applied in the forward direction. Conversely, if the inclination angle is greater than 60 degrees, the armrests 134 will be too close to the ground, impairing usability of the wheel unit. However, the present invention is not limited to the aforementioned inclination angle, which can be set to any angle provided that the leg part at least functions as a means for restricting rotation.

Further, near the bases of the frame parts 133 there are provided inwardly protruding engaging parts 137. The engaging parts 137 are approximately L-shaped projections that are inclined diagonally forward and upward. As described later, when the wheelchair main body 110 and the wheel unit 130 are coupled together, the linear engaged parts 117 of the wheelchair main body 110 are configured to fit into the angled portions of the engaging parts 137 so that the engaging parts 137 and the engaged parts 117 engage with each other. As such, the engaging parts 137 and the engaged parts 117 function as positioning and/or guiding means.

As shown in FIG. 9, at the base end of the inner side of the frame part 133 there is provided an axle 133a for supporting the wheel 131. The axle 133a has a base end with an expanded diameter, and a threaded end with a reduced diameter. In addition, around the axle 133a there is formed a recess 133b that extends forward. Above the recess 133b at the front of the base end of the frame part 133 there is formed a rectangular guide projection 133c. The guide projection 133c has a square shape as seen from the side. The axle 133a is located on a line extending from the vertically opposed sides of the guide projection 133c. Further, in the arm portion of the frame part 133 there are formed a shaft hole 133d that passes through the frame part 133 and a claw projection 133e that has a claw-like shape as seen from the side. These members all work together with or function as a part of the brake device 140 described later.

As shown in FIG. 10, the wheel 131 is rotatably coupled to the connecting shaft 132 via a ceramic bearing 131a and a rubber damper 131b. More specifically, the axle 133a passes through a center hole in the hub of the wheel 131, the bearing 131a fits around the outer circumference of the axle 133a, and the rubber damper 131b is fixed between the outer circumference of the bearing 131a and the inner circumference of the center hole of the hub. A cap 131c is additionally screwed onto the projection at the end of the axle 133a so as to cover the bearing 131a and the rubber damper 131b. In other words, in this wheel unit 130, the wheels 131 are rotatable relative to the connecting shaft 132 and the frame parts 133 via the bearings 131a, and the rubber dampers 131b can absorb vibrations and shocks transmitted from the ground to the wheels 131.

Also as shown in FIG. 10, the brake device 140 is attached between the wheel 131 and the frame part 133. The brake device 140 according to the present embodiment includes a rotary member 141 attached to the center hub of the wheel 131, an engaging member 142 retained in movable fashion on the frame part 133 and arranged to engage with the rotary member 141, an operating lever 144 for operating the engaging member 142, a lock part 145 provided on the operating lever 144, and an urging member in the form of an annular elastic band 146 for urging the engaging member 142 relative to the rotary member 141. As shown in FIG. 10, the rotary member 141 is fixed so as to be able to synchronously rotate with the hub of the wheel 131. Meanwhile, the engaging member 142, the operating lever 144, the lock part 145, and the elastic band 146 are retained on the frame part 133.

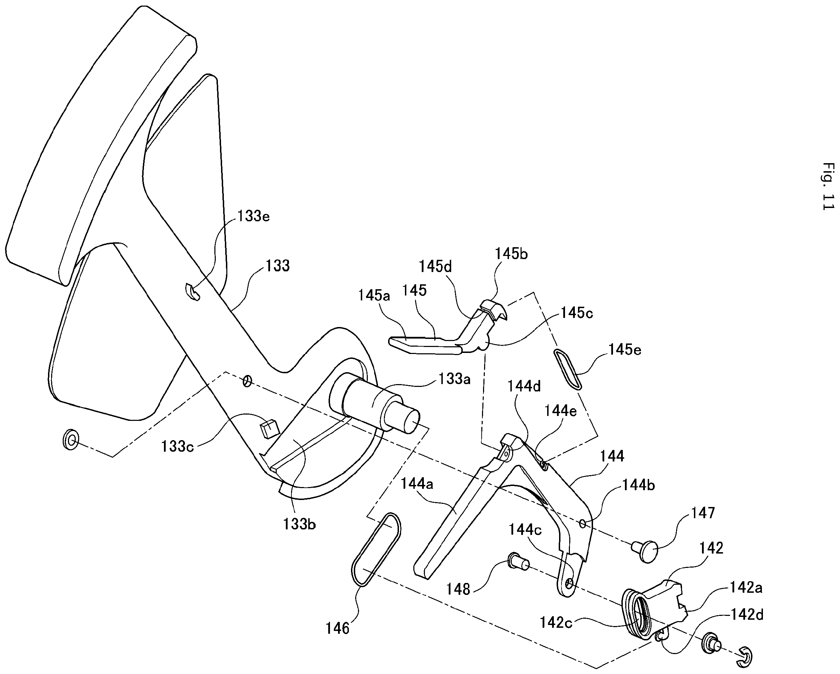

FIG. 11 is an exploded perspective view of part of the brake device 140, namely the engaging member 142, the operating lever 144, the lock part 145, and the elastic band 146, disassembled from the frame part 133. As shown in FIG. 11, the annular elastic band 146 is placed around the base end of the axle 133a of the frame part 133. In addition, the engaging member 142 is pivotally mounted to the operating lever 144 via a second pivot shaft 148. Further, the lock part 145 is pivotally operably mounted to the operating lever 144 via a hole 144d and a connecting part 145c. The operating lever is pivotally mounted to the frame part 133 via a first pivot shaft 147 (shaft holes 133d, 144b). The components shown in FIGs. 10 and 11 are described in further detail below.

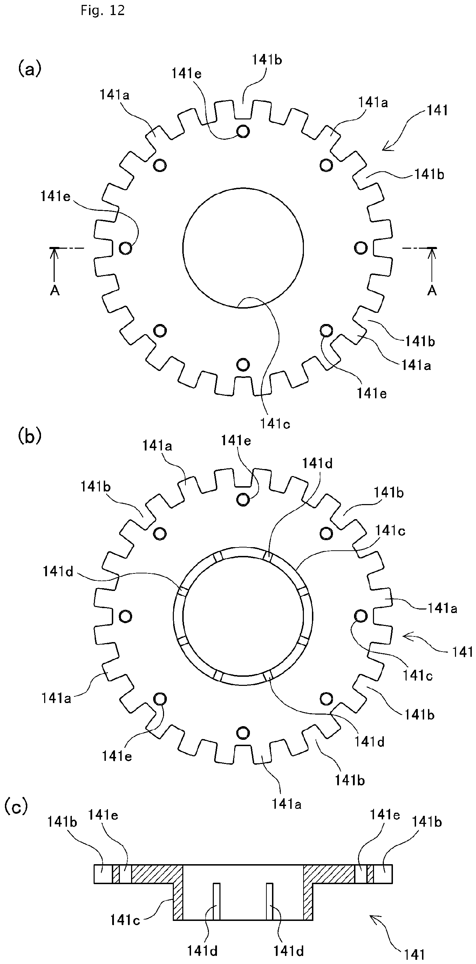

As shown in FIG. 12, the rotary member 141 includes a circular external peripheral part and a plurality of engaging teeth 141a protruding radially from the external peripheral part. The rotary member 141 is in other words shaped like a gear. The plurality of engaging teeth 141a are arranged along the external peripheral part at equal intervals, whereby grooves 141b are defined between the engaging teeth 141a. In other words, the grooves 141b are formed along the radial direction of the rotary member 141. Each of the engaging teeth 141a rises from the external peripheral part at an approximately right angle, and the width of each of the engaging teeth 141a is about equal to the width of each groove 141b. Seen from the side, the end surfaces of the engaging teeth 141a and the bottom surfaces of the grooves 141b form a gentle curve of rectangular convex surfaces. In other words, as seen from the side, the external edges of the engaging teeth 141a extend concentrically with the external peripheral part of the rotary member 141. The rotary member 141 is further provided with a cylindrical part 141c defining a circular hole in its interior, in which there are formed a plurality of slits 141d. In addition, a plurality of fixing holes 141e are drilled in the vicinity of the external peripheral part of the rotary member 141. As shown in FIG. 10, the cylindrical part 141c is pushed outwardly through the center hub of the wheel 131 from the inner side of the wheelchair 100, such that the spokes of the wheel 131 pass through the slits 141d, and a plurality of screws pass through the plurality of fixing holes 141e. The rotary member 141 is then fastened to the wheel 131 by screwing a plurality of screws into the plurality of fasteners 141f arranged around the hub on the outer side of the wheel 131. The axle 133a of the frame part 133 is thus defined as the central axis of the wheel 131 and/or the rotary member 141. In other words, the rotary member 141 rotates synchronously with the wheel 131, and the circular external peripheral part of the rotary member 141 is arranged concentrically with the wheel 131.

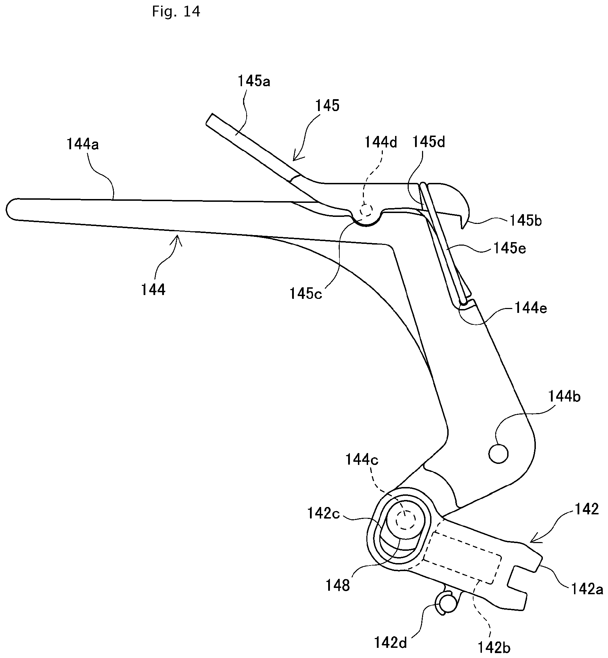

The engaging member 142 is pivotally retained on the frame part 133 - which is a part of the wheelchair - via the operating lever 144 and the elastic band 146. As shown in FIG. 14, the engaging member 142 is formed in an approximately rectangular shape having a short and a long side. At one end of the long side of the engaging member 142 there is provided an engaging projection 142a that is accommodated in the grooves 141b between the engaging teeth 141a so as to engage with the engaging teeth 141a. The engaging projection 142a has at its end a U-shape that splits into two protruding pieces. Each protruding piece has a rectangular end surface, and the gap between the protruding pieces has a rectangular bottom surface. Seen from the side, these end surfaces and bottom surface form a gently curved concave surface. This concave surface corresponds to the curvature of the concave surfaces formed by the engaging teeth 141a and grooves 141b. In other words, the engaging projection 142a is configured such that the engaging projection 142a and the engaging teeth 141a engage with each other by fitting the two protruding pieces into corresponding adjacent grooves 141b of the rotary member 141, while fitting one of the engaging teeth 141a into the gap between the two protruding pieces.

At the other end in the longitudinal direction of the engaging member 142 there is formed an ellipsoidal elongate hole 142c extending in the transverse direction. The engaging member 142 is pivotally coupled to the operating lever 144 by the second pivot shaft 148 passing through the elongate hole 142c and a connecting part 144c of the operating lever 144. The elongate hole 142c is configured to allow the second pivot shaft 148 to float in the longitudinal direction of the elongate hole 142c. The engaging member 142 is thus coupled to the operating lever 144 such that it can both pivot and slide in the longitudinal direction at the same time.

Further, on the inner surface between the engaging projection 142a and the elongate hole 142c of the engaging member 142 there is formed a guide groove 142b extending linearly in the horizontal direction. The guide groove 142b is open on the inner side and closed on the outer side of the engaging member 142. The protruding guide projection 133c of the frame part 133 is accommodated in this guide groove 142b. The width of the guide groove 142b is about equal to the length of the horizontal and vertical sides of the guide projection 133c. In a state where the guide projection 133c is accommodated in the guide groove 142b, the guide projection 133c moves relative to the guide groove 142b along the longitudinal direction of the guide groove 142b. At this time, since the width of the guide projection 133c is about equal to the vertical length of the guide groove 142b, the orientation of the frame part 133 with respect to the engaging member 142 (i.e. in which the engaging projection 142a faces the axle 133a) is maintained constant. In other words, the relationship between the guide groove 142b and the guide projection 133c restricts the direction of movement of the engaging member 142, and guides a linear shift of the engaging member 142 toward the axle 133a.

At the lower surface of the engaging member 142 there is formed a frame 142d. The frame 142d extends downward approximately from the center of the lower surface of the engaging member 142, and is bent inwardly. A semicircular flange protrudes from the end of the frame 142d. The elastic band 146 is placed around the frame 142d, whereby the flange is able to retain the elastic band 146 so that it does not come loose. The frame 142d is arranged in the recess 133b of the frame part 133, and the elastic band 146 spans between the frame 142d and the axle 133a. In other words, the recess 133b restricts displacement of the frame 142d and the elastic band 146.

FIG. 14 is a side view of a lever assembly consisting of the engaging member 142, the operating lever 144, and the lock part 145. This lever assembly is arranged substantially coplanar with the rotary member 141 in the horizontal direction of the wheelchair 100, and the engaging member 142 and the operating lever 144 are coupled to move on the same plane. In other words, the engaging member 142 moves in an approaching or retreating direction relative to the rotary member 141 responsive to a pivoting motion of the operating lever 144.

As shown in FIG. 14, the operating lever 144 has a handle part 144a extending forward such that the wheelchair occupant can grip it. In FIG. 14, the operating lever 144 is bent downward at the rear of the handle part 144a (on the right side), and is bent diagonally forward and downward at its bottom end. At the lower bend of the operating lever 144 there is drilled a shaft hole 144b. The operating lever 144 is pivotably mounted to the frame part 133 by the first pivot shaft 147 passing through the shaft hole 144b of the operating lever 144 and the shaft hole 133d of the frame part 133. In addition, at the opposite end of the handle part 144a of the operating lever 144 there is drilled a connecting hole 144c. The operating lever 144 and the engaging member 142 are pivotally coupled by the second pivot shaft 148 passing through the connecting hole 144c and the elongate hole 142c of the engaging member 142. Further, near the rear end (upper bend) of the handle part 144a the lock part 145 is pivotally fitted via the hole 144d and the connecting part 145c.

The lock part 145 includes an operating part 145a that extends forward, a lock claw 145b provided at the rear end of the lock part 145 and extending downward, and a connecting part 145c pivotally coupled to the operating lever 144. The lock claw 145b is configured to be able to engage with the claw projection 133e of the frame part 133. In addition, a band receiving groove 145d is formed next to the lock claw 145b of the lock part 145. One end of a band 145e is placed in this band receiving groove 145d, and the other end of the band 145e is disposed in a notch 144e provided on the rear edge of the operating lever 144. The tensile force of this band 145e urges the lock claw 145b in the direction approaching the operating lever 144 (i.e. a locking direction).

The rotary member 141, engaging member 142, operating lever 144, and lock part 145 of the brake device 140 are made of a synthetic resin material, and the elastic band 146 and the band 145e are made of synthetic or natural rubber. However, the present invention is not limited to this configuration, and part or all of these components may be made of metallic materials. When employing metallic materials, the urging members may be springs, for example.

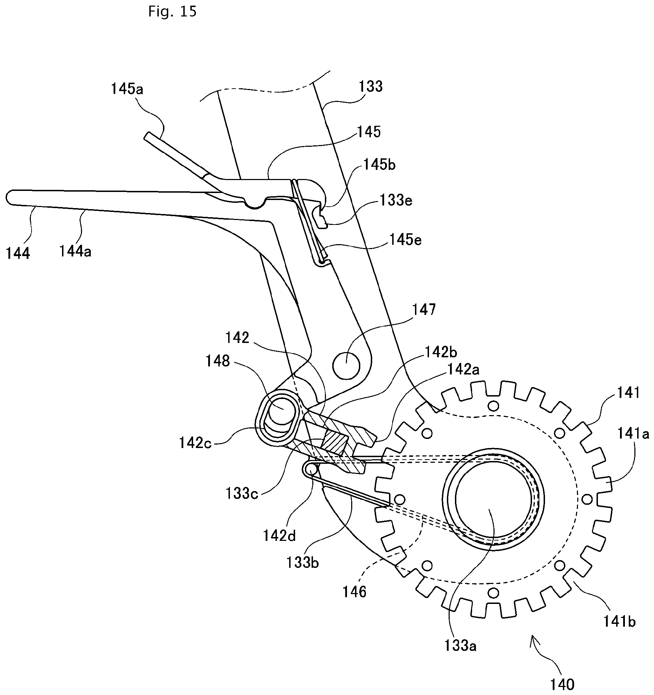

FIG. 15 is a schematic side view of the brake device 140 of the wheelchair 100 according to this embodiment in the travelling mode. In the travelling mode, the engaging member 142 is located separate from the external peripheral part of the rotary member 141. Specifically, the engaging projection 142 is located in a first position in which the engaging member 142 is located outside of the grooves 141b of the rotary member 141, and the wheel 131 is therefore rotatable relative to the frame part 133. At this time, the lock claw 145b of the lock part 145 is caught on the claw projection 133e of the frame part 133 with the handle part 144a of the operating lever 144 being maintained horizontal relative to the wheelchair 100. The locked state is maintained by the tensile force of the band 145e.

As shown in FIG. 15, when the operating lever 144 is in the lock position, the bottom end of the operating lever 144 is located toward the rear, thereby drawing the engaging member 142 rearward. At this time, the second pivot shaft 148 is located above the elongate hole 142c of the engaging member 142, and the guide projection 133c of the frame part 133 is located at the rear end (on the right side) of the guide groove 142b. The stretched elastic band 146 spans between the frame 142d of the engaging member 142 and the axle 133a of the frame part 133. In other words, because the operating lever 144 is locked to the frame part 133 by the lock part 145, the engaging projection 142a is maintained separate from the external peripheral part of the rotary member 141.

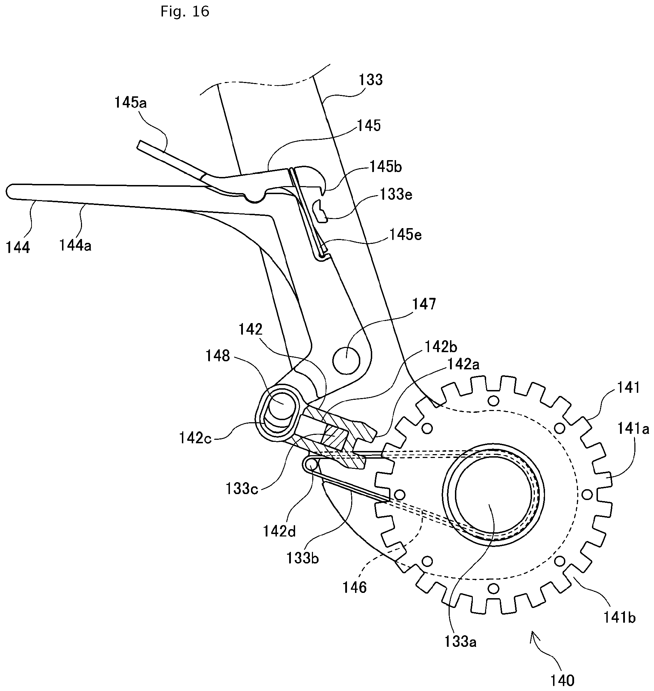

FIG. 16 is a schematic side view of the brake device 140 unlocked from the travelling mode of the wheelchair 100 as shown in FIG. 15. When the wheelchair occupant (or user) pushes the operating part 145a of the lock part 145 down toward the operating lever 144, the band 145e is stretched as the lock claw 145b is raised up. The lock claw 145b is then separated from the claw projection 133e, and the operating lever 144 is unlocked. In this unlocked state, the tensile force of the elastic band 146 pulls the engaging member 142 toward the axle 133a. As a result, the operating lever 144 is urged to pivot in a counter-clockwise direction.

When the handle part 144a of the operating lever 144 in this unlocked state is pivoted downward via the first pivot shaft 147, the engaging member 142 pivots relative to the operating lever 144 via the second pivot shaft 148, and the second pivot shaft 148 moves downward within the elongate hole 142c, causing a relative forward movement (toward the left side) of the guide projection 133c within the guide groove 142b. In other words, in response to the pivoting of the operating lever 144, the engaging projection 142a moves linearly toward the rotary member 141 while maintaining its orientation toward the center of the axle 133a. Ultimately, the engaging member 142 shifts until the engaging projection 142a is accommodated in grooves 141b of the rotary member 141. When the engaging member 142 is moving, there are cases where the end of the engaging projection 142a touches the end of one of the engaging teeth 141a such that the engaging projection 142a cannot be accommodated in the grooves 141b. Even in such a case, the engaging projection 142a can easily be guided into the grooves 141b by rotating the rotary member 141 slightly, causing the engaging projection 142a and the engaging teeth 141a to slide against each other. This is because the end surfaces of the engaging projection 142a and the engaging teeth 141a are shaped as mutually corresponding curved surfaces.

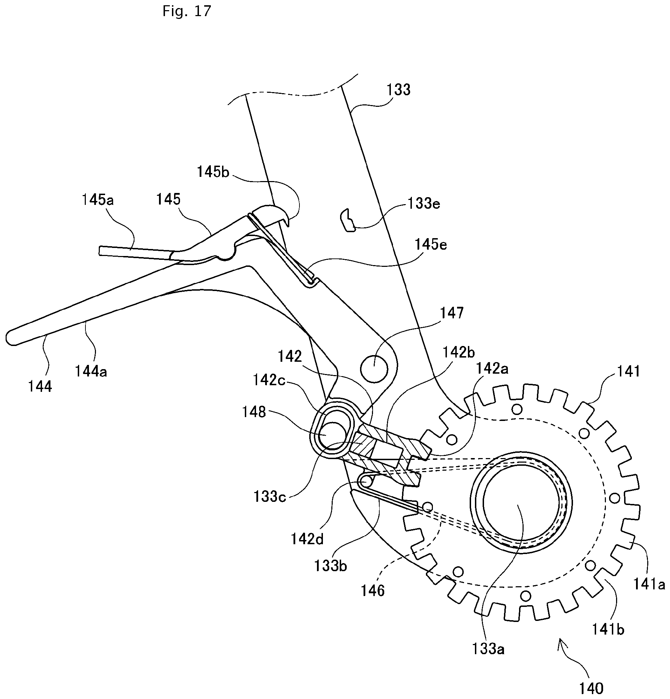

FIG. 17 is a schematic side view of the brake device 140 of the wheelchair 100 according to this embodiment in a braking mode. In this braking mode, the engaging projection 142a of the engaging member 142 is accommodated in grooves 141b between the engaging teeth 141a of the rotary member 141. More specifically, the engaging projection 142a and the engaging teeth 141a engage with each other due to the two protruding pieces fitting into corresponding adjacent grooves 141b of the rotary member 141, and one of the engaging teeth 141a fitting into the gap between the two protruding pieces. The end surfaces of the engaging member 142 abut the bottom surfaces of the grooves 141b. In the present embodiment, the engaging projection 142a is almost completely accommodated in the grooves 141b, but the engaging projection may also be only partially accommodated in the grooves. That is to say, rotation of the wheels 131 relative to the frame parts 133 is restricted by positioning of the engaging member 142 in the second position where the engaging projection 142a is positioned within the grooves 141b of the rotary member 141. This second position is maintained by the elastic band 146 urging the frame 142d of the engaging member 142 toward the axle 133a. In other words, by pivoting the operating lever 144 in a clockwise direction against the tensile force of the elastic band 146, the engaging member 142 moves linearly away from the rotary member 141 so that the engaging projection 142a is separated from the grooves 141b.

As shown in FIG. 17, in the braking mode, the handle part 144a of the operating lever 144 is inclined diagonally forward and downward relative to the wheelchair 100, the second pivot shaft 148 is positioned at the bottom of the elongate hole 142c of the engaging member 142, and the guide projection 133c of the frame part 133 is positioned at the front end (left side) of the guide groove 142b. The occupant can release the braking of the brake device 140 by pulling the handle part 144a of the operating lever 144 upward to shift the engaging member 142 to the first position.

The operational effects of the brake device 140 and wheelchair 100 according to the present embodiment are described below.

With the brake device 140 according to the present embodiment, the engaging projection 142a of the engaging member 142 supported on the frame part 133 of the wheelchair 100 engages with the engaging teeth 141a formed on the rotary member 141 to enable braking of the rotation of the rotary member 141 and the wheels 131. In other words, the rotation of the engaging teeth 141a is locked by the engaging projection 142a, which enables safe braking of the wheels 131 without subjecting the components to great stress due to pressure contact or the like. The brake device 140 according to this embodiment thus allows for the components to be made of a synthetic resin and rubber materials, without using metallic materials. Switching between a travelling mode and a braking mode is performed by shifting the engaging member 142 between a first position whereby the engaging projection 142a is positioned outside the grooves 141b and a second position where the engaging projection 142a engages the engaging teeth 141a. In addition, the grooves 141b of the rotary member 141 extend in a radial direction, while the engaging projection 142a moves straight toward the center of the rotary member 141. In other words, since the direction in which the grooves 141b between the engaging teeth 141a extend and the direction in which the engaging projection 142a moves are radially aligned, the engaging projection 142a can smoothly enter and separate from the grooves 141b. Further, it is possible to selectively maintain the travelling mode or the braking mode of the wheelchair 100 by means of the elastic band 146 and the lock part 145 cooperatively acting on the engaging member 142. Accordingly, the brake device 140 according to the present embodiment enables easy and smooth braking of the rotation of the wheels 131 while suppressing stress during a braking operation.

### (Variants)

The brake device and wheelchair according to the present invention are not limited to the aforementioned embodiment, but can also be varied, for example as described below.
(1) In the aforementioned embodiment, the wheelchair consists of a wheelchair main body and a wheel unit, the wheel unit being provided with a brake device. However, the present invention is not limited to this configuration. The brake device according to the present invention may also be applied to a non-removable conventional wheelchair, in which case the brake device may similarly be arranged between the frame part and the wheels of the wheelchair.
(2) In the aforementioned embodiment, the brake device is configured as a handbrake operable by the wheelchair occupant. However, the present invention is not limited to this configuration. The brake device may for example be operated by an assistant brake lever provided on the push handle, which operates the components (engaging member or operating lever) of the brake device via a wire.
(3) In the aforementioned embodiment, an urging member in the form of an elastic band urges the engaging member toward the second position. However, the present invention is not limited to this configuration. The urging member may urge the engaging member toward the first position while the lock part locks the engaging member in the second position. Such a configuration could be realized by, for example, connecting the engaging member and the axle with a spring that urges the engaging member and the axle away from each other. Accordingly, those skilled in the art would readily be able to design or change the structure or arrangement of the present invention based on the technical thoughts thereof.

The present invention is not limited to the embodiments and variants described above, but may be practiced in a variety of aspects within the technical scope of the invention.

### [DESCRIPTION OF THE REFERENCE NUMERAL]

100 Wheelchair
110 Wheelchair main body
111 Side frame
112 Seat unit
113 Seat
114 Backrest
116 Pivot lever
117 Engaged part
118 Footrest
119 Push handle
120 Front caster
129 Rear caster
130 Wheel unit
131 Wheel
132 Connecting shaft
133 Frame part
133a Axle
133b Recess
133c Guide projection
133d Shaft hole
133e Claw projection
134 Armrest
135 Side guard
136 Leg part
137 Engaging part
140 Brake device
141 Rotary member
141a Engaging teeth
141b Grooves
141c Cylindrical part
141d Slit
141e Fixing hole
141f Fastener
142 Engaging member
142a Engaging projection
142b Guide groove
142c Elongate hole
142d Frame
144 Operating lever
144a Handle part
144b Shaft hole
144c Connecting hole
144d Hole
144e Notch
145 Lock part
145a Operating part
145b Lock claw
145c Connecting part
145d Band receiving groove
145e Band
146 Elastic band (urging member)
147 First pivot shaft
148 Second pivot shaft
150 Coupling mechanism

## Claims

1. A brake device (140) for braking a wheel (131) of a wheelchair (100), the brake device comprising:
a rotary member (141) comprising a round external peripheral part arranged concentrically with the wheel (131) and a plurality of engaging teeth (141a) that protrude radially from the external peripheral part, the rotary member (141) rotating synchronously with the wheel (131);
an engaging member (142) retained in movable fashion on a frame part (133) of the wheelchair (100) and comprising an engaging projection (142a) that engages with the engaging teeth (141a), the engaging projection (142a) being accommodated in grooves (141b) between the plurality of engaging teeth (141a) of the rotary member (141), and the engaging member (142) shifting between a first position whereby the engaging projection (142a) is positioned outside the grooves (141b) and a second position where at least a portion of the engaging projection (142a) is positioned inside the grooves (141b);
an urging member (146) that urges the engaging member (142) to one of the first position and the second position; and
a lock part (145) that maintains the engaging member (142) in the other of the first position and the second position,
wherein the engaging member (142) shifts between the first position and the second position such that the engaging projection (142a) moves linearly toward or away from the rotary member (141) along a radial direction of the rotary member, while the engaging projection (142a) maintains its orientation toward the center of the rotary member (141);
**characterized in that**
the urging member (146) is an elastic band stretched between a central axis of the wheel (131) and/or the rotary member (141) and the engaging member (142), wherein the engaging member (142) is urged to the second position by a tensile force of the elastic band.

2. The brake device (140) according to claim 1, wherein the plurality of engaging teeth (141a) are arranged along the external peripheral part of the rotary member (141) at equal intervals, and the engaging projection (142a) has at its end a U-shape that splits into two protruding pieces, wherein the engaging projection (142a) and the engaging teeth (141a) engage with each other due to the two protruding pieces fitting into corresponding adjacent grooves (141b) of the rotary member (141), and one of the engaging teeth (141a) fitting into a gap between the two protruding pieces.

3. The brake device (140) according to one of claims 1 or 2, wherein the engaging member (142) is provided with a guide groove (142b) that extends linearly in the radial direction of the rotary member (141), a guide projection (133c) is formed so as to protrude from the frame part (133) of the wheelchair (100), the guide projection (133c) being arranged within the guide groove (142b), and wherein a linear movement of the engaging projection (142a) is guided by the guide projection (133c) sliding relatively within the guide groove (142b).

4. The brake device (140) according to one of claims 1 to 3, further comprising an operating lever (144) pivotally supported on the frame part (133) to operate shifting of the engaging member (142), the operating lever (144) being pivotally coupled to the engaging member (142) so as to cause the engaging projection (142a) to move linearly along the radial direction of the rotary member (141).

5. The brake device (140) according to claim 4, wherein the lock part (145) comprises a lock claw (145b) attached to the operating lever (144), wherein the lock claw (145b) engages with a projection (133e) provided on the frame part (133) of the wheelchair (100) to maintain the operating lever (144) and the engaging member (142) in the first position or the second position.

6. The brake device (140) according to one of claims 1 to 5, wherein the rotary member (141), the engaging member (142), and the lock part (145) are made of a synthetic resin material, and the urging member (146) is made of a rubber material.

7. A wheelchair (100) comprising the brake device (140) according to one of claims 1 to 6.

8. A wheelchair (100) comprising:
a wheelchair main body (110) that has a seat unit (112), a pair of side frames (111) that support the seat unit (112) and has front casters (120) and rear casters (129) that are respectively attached to the front and rear of the pair of side frames (111);
a wheel unit (130) that has a pair of frame parts (133), a pair of wheels (131) supported outside of the pair of frame parts (133), a connecting shaft (132) that extends between the pair of wheels (131) and that rotatably connects the pair of wheels (131) at both ends of the connecting shaft (132), and a pair of armrests (134) that are fixed to the connecting shaft (132) and extend above and forward of the wheels (131); and
a connection mechanism that is provided to the wheelchair main body (110) and that removably connects the connecting shaft (132) of the wheel unit to the wheelchair main body (110),
wherein the brake device (140) according to one of claims 1 to 6 is attached between the wheel (131) and the frame (133) of the wheel unit (130).

## Patentansprüche

1. Eine Bremsvorrichtung (140) zum Bremsen eines Rades (131) eines Rollstuhls (100), wobei die Bremsvorrichtung Folgendes aufweist:
ein Rotationselement (141), umfassend ein rundes äußeres Umfangsteil, das konzentrisch mit dem Rad (131) angeordnet ist, und eine Vielzahl von Eingriffszähnen (141a), die radial von dem äußeren Umfangsteil vorstehen, wobei sich das Rotationselement (141) synchron mit dem Rad (131) dreht;
ein Eingriffselement (142), das beweglich an einem Rahmenteil (133) des Rollstuhls (100) gehalten wird und einen Eingriffsvorsprung (142a) aufweist, der in die Eingriffszähne (141a) eingreift, wobei der Eingriffsvorsprung (142a) in Nuten (141b) zwischen der Vielzahl von Eingriffszähnen (141a) des Rotationselements (141) aufgenommen ist, und sich das Eingriffselement (142) zwischen einer ersten Position, in der der Eingriffsvorsprung (142a) außerhalb der Nuten (141b) positioniert ist, und einer zweiten Position verschiebt, in der mindestens ein Abschnitt des Eingriffsvorsprungs (142a) innerhalb der Nuten (141b) positioniert ist;
ein Beaufschlagungselement (146), das das Eingriffselement (142) in die erste oder zweite Position drückt; und
ein Verriegelungsteil (145), das das Eingriffselement (142) in der jeweils anderen der ersten und zweiten Position hält,
wobei sich das Eingriffselement (142) zwischen der ersten Position und der zweiten Position so verschiebt, dass sich der Eingriffsvorsprung (142a) linear in Richtung zum Rotationselement (141) entlang einer radialen Richtung des Rotationselements oder von diesem weg bewegt, während der Eingriffsvorsprung (142a) seine Ausrichtung zur Mitte des Rotationselements (141) beibehält; **dadurch gekennzeichnet, dass**
das Beaufschlagungselement (146) ein elastisches Band ist, das zwischen einer Mittelachse des Rades (131) und/oder des Rotationselements (141) und dem Eingriffselement (142) gespannt ist, wobei das Eingriffselement (142) durch eine Zugkraft des elastischen Bandes in die zweite Position gedrückt wird.

2. Bremsvorrichtung (140) gemäß Anspruch 1, wobei die Vielzahl von Eingriffszähnen (141a) entlang des äußeren Umfangsteils des Rotationselements (141) in gleichen Abständen angeordnet ist und der Eingriffsvorsprung (142a) an seinem Ende eine U-Form aufweist, die sich in zwei vorstehende Teile teilt, wobei der Eingriffsvorsprung (142a) und die Eingriffszähne (141a) miteinander in Eingriff stehen, da sich die beiden vorstehenden Teile in entsprechende benachbarte Nuten (141b) des Rotationselements (141) einpassen, und einer der Eingriffszähne (141a) sich in einen Spalt zwischen den beiden vorstehenden Teilen einpasst.

3. Bremsvorrichtung (140) gemäß einem der Ansprüche 1 oder 2, wobei das Eingriffselement (142) mit einer Führungsnut (142b) versehen ist, die sich linear in radialer Richtung des Rotationselements (141) erstreckt, ein Führungsvorsprung (133c) so gebildet ist, dass er aus dem Rahmenteil (133) des Rollstuhls (100) herausragt, der Führungsvorsprung (133c) innerhalb der Führungsnut (142b) angeordnet ist, und wobei eine lineare Bewegung des Eingriffsvorsprungs (142a) durch den Führungsvorsprung (133c) geführt ist, der relativ innerhalb der Führungsnut (142b) gleitet.

4. Bremsvorrichtung (140) gemäß einem der Ansprüche 1 bis 3, die darüber hinaus einen Betätigungshebel (144) aufweist, der schwenkbar an dem Rahmenteil (133) abgestützt ist, um das Verschieben des Eingriffselements (142) zu bewerkstelligen, wobei der Betätigungshebel (144) schwenkbar mit dem Eingriffselement (142) gekoppelt ist, um zu bewirken, dass sich der Eingriffsvorsprung (142a) linear entlang der radialen Richtung des Rotationselements (141) bewegt.

5. Bremsvorrichtung (140) gemäß Anspruch 4, wobei das Verriegelungsteil (145) eine am Betätigungshebel (144) befestigte Verriegelungsklaue (145b) aufweist, wobei die Verriegelungsklaue (145b) in einen am Rahmenteil (133) des Rollstuhls (100) vorgesehenen Vorsprung (133e) eingreift, um den Betätigungshebel (144) und das Eingriffselement (142) in der ersten Position oder der zweiten Position zu halten.

6. Bremsvorrichtung (140) gemäß einem der Ansprüche 1 bis 5, wobei das Rotationselement (141), das Eingriffselement (142) und das Verriegelungsteil (145) aus einem Kunstharzmaterial bestehen und das Beaufschlagungselement (146) aus einem Gummimaterial besteht.

7. Ein Rollstuhl (100), der die Bremsvorrichtung (140) gemäß einem der Ansprüche 1 bis 6 aufweist.

8. Rollstuhl (100), der Folgendes aufweist:
einen Rollstuhl-Hauptkörper (110), der eine Sitzeinheit (112), ein Paar Seitenrahmen (111), die die Sitzeinheit (112) tragen, und vordere Rollen (120) und hintere Rollen (129) aufweist, die an der Vorderseite bzw. Rückseite des Paares von Seitenrahmen (111) befestigt sind;
eine Radeinheit (130), die ein Paar Rahmenteile (133), ein Paar Räder (131) aufweist, die außerhalb des Paares von Rahmenteilen (133) abgestützt sind, eine Verbindungswelle (132), die sich zwischen dem Paar Rädern (131) erstreckt und das Paar Räder (131) an beiden Enden der Verbindungswelle (132) drehbar verbindet, und ein Paar Armlehnen (134) aufweist, die an der Verbindungswelle (132) befestigt sind, die sich über und vor den Rädern (131) erstreckt; und
einen Verbindungsmechanismus, der an dem Rollstuhl-Hauptkörper (110) vorgesehen ist und die Verbindungswelle (132) der Radeinheit abnehmbar mit dem Rollstuhl-Hauptkörper (110) verbindet,
wobei die Bremsvorrichtung (140) gemäß einem der Ansprüche 1 bis 6 zwischen dem Rad (131) und dem Rahmen (133) der Radeinheit (130) angebracht ist.

## Revendications

1. Dispositif de frein (140) pour freiner une roue (131) d'un fauteuil roulant (100), le dispositif de frein comprenant :
un élément rotatif (141) comprenant une partie périphérique extérieure ronde agencée de manière concentrique avec la roue (131) et une pluralité de dents de mise en prise (141a) qui font saillie radialement depuis la partie périphérique extérieure, l'élément rotatif (141) tournant de manière synchrone avec la roue (131) ;
un élément de mise en prise (142) maintenu de manière mobile sur une partie cadre (133) du fauteuil roulant (100) et comprenant une saillie de mise en prise (142a) qui se met en prise avec les dents de mise en prise (141a), la saillie de mise en prise (142a) étant reçue dans des rainures (141b) entre la pluralité de dents de mise en prise (141a) de l'élément rotatif (141) et l'élément de mise en prise (142) se déplaçant entre une première position dans laquelle la saillie de mise en prise (142a) est positionnée à l'extérieur des rainures (141b) et une seconde position dans laquelle au moins une partie de la saillie de mise en prise (142a) est positionnée à l'intérieur des rainures (141b) ;
un élément de poussée (146) qui pousse l'élément de mise en prise (142) vers l'une des première position et seconde position ; et
une pièce de verrouillage (145) qui maintient l'élément de mise en prise (142) dans l'autre des première position et seconde position,
dans lequel l'élément de mise en prise (142) se déplace entre la première position et la seconde position de façon que la saillie de mise en prise (142a) effectue un mouvement linéaire la rapprochant ou l'éloignant de l'élément rotatif (141) le long d'une direction radiale de l'élément rotatif, tandis que la saillie de mise en prise (142a) se maintient orientée vers le centre de l'élément de mise en prise (141) ;
**caractérisé en ce que**
l'élément de poussée (146) est une bande élastique étirée entre un axe central de la roue (131) et/ou de l'élément rotatif (141) et l'élément de mise en prise (142), l'élément de mise en prise (142) étant poussé vers la seconde position par une force de traction de la bande élastique.

2. Dispositif de frein (140) selon la revendication 1, dans lequel la pluralité de dents de mise en prise (141a) est agencée le long de la partie périphérique extérieure de l'élément rotatif (141) à intervalles égaux, et la saillie de mise en prise (142a) présente à son extrémité une forme en U qui se divise en deux pièces saillantes, dans lequel la saillie de mise en prise (142a) et les dents de mise en prise (141a) s'engrènent les unes avec les autres grâce aux deux pièces saillantes qui s'emboîtent dans des rainures (141b) adjacentes correspondantes de l'élément rotatif (141), et une des dents de mise en prise (141a) s'emboîtant dans un espace entre les deux pièces saillantes.

3. Dispositif de frein (140) selon l'une des revendications 1 ou 2, dans lequel l'élément de mise en prise (142) est pourvu d'une rainure de guidage (142b) qui s'étend de manière linéaire dans la direction radiale de l'élément rotatif (141), une saillie de guidage (133c) est formée de manière à faire saillie par rapport à la partie cadre (133) du fauteuil roulant (100), la saillie de guidage (133c) étant disposée à l'intérieur de la rainure de guidage (142b), et dans lequel un mouvement linéaire de la saillie de mise en prise (142a) est guidé par la saillie de guidage (133c) qui coulisse à l'intérieur de la rainure de guidage (142b).

4. Dispositif de frein (140) selon l'une des revendications 1 à 3, comprenant, en outre, un levier de commande (144) supporté de manière pivotante sur la partie cadre (133) pour commander le déplacement de l'élément de mise en prise (142), le levier de commande (144) étant couplé de manière pivotante à l'élément de mise en prise (142) de manière à provoquer un mouvement linéaire de la saillie de mise en prise (142a) le long de la direction radiale de l'élément rotatif (141).

5. Dispositif de frein (140) selon la revendication 4, dans lequel la pièce de verrouillage (145) comprend une griffe de verrouillage (145b) reliée au levier de commande (144), dans lequel la griffe de verrouillage (145b) se met en prise avec une saillie (133e) située sur la partie cadre (133) du fauteuil roulant (100) pour maintenir le levier de commande (144) et l'élément de mise en prise (142) dans la première position ou la seconde position.

6. Dispositif de frein (140) selon l'une des revendications 1 à 5, dans lequel le matériau dont sont formés l'élément rotatif (141), l'élément de mise en prise (142) et la partie de verrouillage (145) est une résine synthétique et l'élément de poussée (140) est formé d'un matériau de caoutchouc.

7. Fauteuil roulant (100) comprenant le dispositif de frein (140) selon l'une des revendications 1 à 6.

8. Fauteuil roulant (100) comprenant :
un corps principal de fauteuil roulant (110) qui comprend une unité formant siège (112), deux châssis latéraux (111) qui supportent l'unité formant siège (112) et comportent des roulettes avant (120) et des roulettes arrière (129) qui sont fixées, respectivement, à l'avant et à l'arrière des deux châssis latéraux (111) ;
un train de roues (130) qui comprend une paire de parties cadres (133), une paire de roues (131) supportées à l'extérieur de la paire de parties cadres (133), une tige de connexion (132) qui s'étend entre la paire de roues (131) et qui connecte en rotation la paire de roues (131) aux deux extrémités de la tige de connexion (132), et une paire d'accoudoirs (134) qui sont fixés sur la tige de connexion (132) et s'étendent au-dessus et en avant des roues (131) ; et
un mécanisme de connexion qui est situé sur le corps principal de fauteuil roulant (110) et qui connecte de manière amovible la tige de connexion (132) du train de roues au corps principal de fauteuil roulant (110),
dans lequel le dispositif de frein (140) selon l'une des revendications 1 à 6 est fixé entre la roue (131) et le cadre (133) du train de roues (130).
